# EUROPEAN PATENT APPLICATION

(11) **EP 0 809 395 A2**
(43) Date of publication of application: **26.11.1997**
(21) Application number: 97201427.8
(22) Date of filing: 12.05.1997
(51) Int. Cl.: H04N 3/15

(54) **An X-Y addressable CMOS APS with compact pixel pitch**

(30) Priority: 22.05.1996 US 18128; 21.03.1997 US 821988
(71) Applicant: EASTMAN KODAK COMPANY, Rochester, New York 14650 (US)
(72) Inventor: Lee, Paul P., Rochester, New York 14650-2201 (US); Guidash, Robert M., Rochester, New York 14650-2201 (US); Kenney, Timothy J., Rochester, New York 14650-2201 (US); Lee, Teh-Hsuang, Rochester, New York 14650-2201 (US)
(74) Representative: Nunney, Ronald Frederick Adolphe

(57) **Abstract**

An active pixel sensor that is x-y addressable that uses serial shift registers to select an image window resulting in less semiconductor area being employed compared with prior art address decoding techniques comprising: an x-y addressable imager having signal lines in both x and y directions; at least one pair of serial shift registers operatively connected to the x-y imager such that there is at least one serial shift register in each x and y directions to select signal lines to be applied to the x-y imager; and loading means for placing bit patterns into the shift registers.

## Description

### FIELD OF THE INVENTION

The present invention relates generally to the operation of an active pixel sensor and more specifically to an x-y addressable feature of such a sensor that allows each and every one of the pixels in the array to be selected and read out singly or in groups.

### BACKGROUND OF THE INVENTION

In an x-y addressable imager such as an active pixel sensor (APS), the conventional method of selecting pixels to be read out is by employing a full address decoding circuit which translates the binary encoded addresses into the specific x-y signaling lines. By changing the addresses in a pre-determined fashion, any arbitrary rectangular window, or single pixel can be selected for output. This method requires a decoder for each of the x and y signaling lines and therefore requires packing the circuit to fit the peel pitch of the imager.

A simpler method of generating x-y addresses is to use serial shift registers instead of address decoders. The serial shift register design is simpler to implement and allows smaller spacing between pixels, but is not capable of performing the sub-windowing function.

It should be apparent from the foregoing discussion that there remains a need in the art for an x-y addressable pixel sensor that allows smaller spacing between pixels as well as for as retaining the capability of sub-windowing.

### SUMMARY OF THE INVENTION

The present invention overcomes the previously discussed shortcomings within the prior art by using additional circuits to pre-load the shift registers so that read-out of the sub-windows can be accomplished. The result is that the present invention provides x-y addressable features to active pixel sensor (APS) sensors that allow each and every one of the pixels in the array to be selected and read out singly or in groups. This feature allows the readout of the image sensor in sub-window format where the array of pixels read out can be programmed to be a portion of the total imager. The sub-window format allows trading off the number of pixels per image output (resolution) with the frame rate of the read out and also enables electronic zoom and pan operation.

### ADVANTAGEOUS EFFECT OF THE INVENTION

By using serial shift registers to select the signaling lines both in x and y directions, the per row and per column circuit required is simplified from a full address decoder which yes up more area to a shift register design. This allows shrinking the pixel size of the imager to a smaller dimension. For example, the conventional APS pixel design is 20 times the smallest allowed line length of the integrated circuit fabrication technology. This 20x limit is due to the size of the address decoder. By using the serial shift register integration, this limit can be reduced from between 7 to 15 times the size of the line length. Therefore, the overall size of the imager can be reduced by 25% to 67% without using higher cost smaller geometry fabrication technology. The present invention maintains the important feature of sub-windowing when the shift register design is used to achieve smaller pixel and therefore smaller die-size.

### BRIEF DESCRIPTION OF THE DRAWINGS

FIG. 1 is a conventional x-y addressable imager;
FIG. 2 is an x-y addressable imager employing shift registers as envisioned by the present invention; and
FIG. 3 is another x-y addressable imager embodiment of the present invention employing shift registers.

To facilitate understanding, identical reference numerals have been used, where possible, to designate identical elements that are common to the figures.

### DETAILED DESCRIPTION OF THE INVENTION

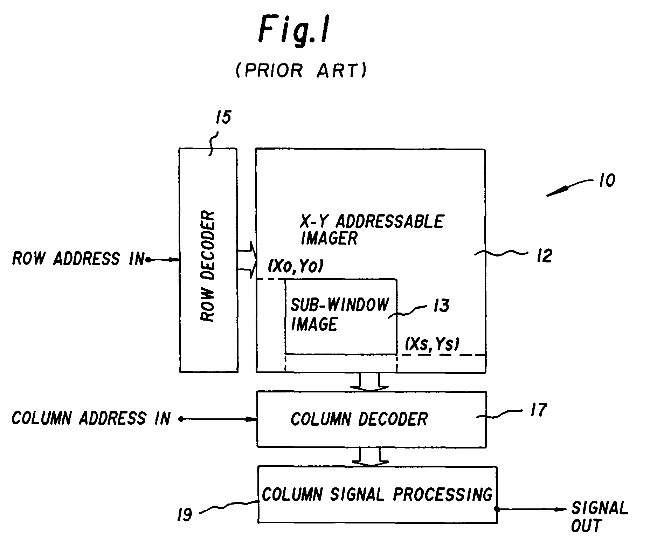

Figure 1 shows a conventional x-y addressable imager, generally referred to as 10, having x-y addressable imager 12 with a contained sub-window image 13 within imager 12, row decoder 15, column decoder 17, and column signal processing 19.

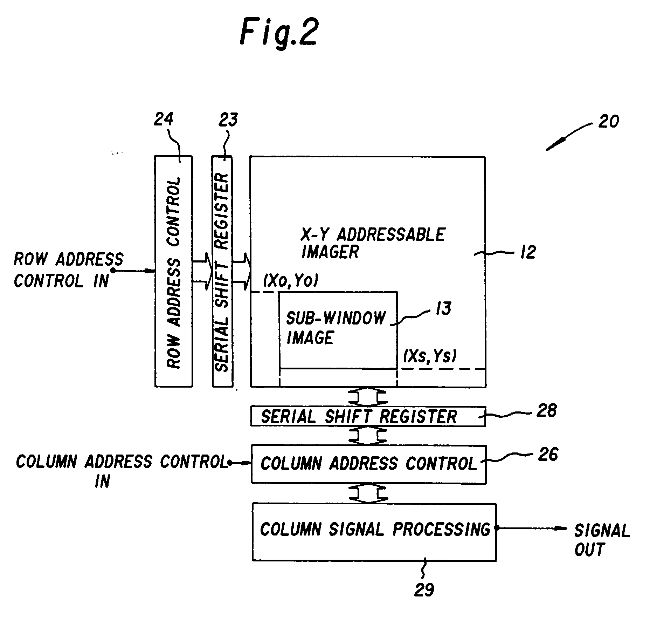

Figure 2 illustrates a sensor 20 as envisioned by the present invention having x-y addressable imager 12 with sub-window image 13. The additional circuits added to the x and the y signaling control are shift registers 23, 28. The shift registers 23, 28 are used to interface the row address 24 and the column address 26, respectively, to the imager. The shift registers 23, 28 allow for a pre-determined starting location of each shift register to be loaded with a digital "1" to select the stating x-y location. The shift register then subsequently scans through a predetermined number of locations to select the size of the sub-window to be read out through the column signal processing electronics 29. The added circuit controls the shifting of the digital "1" so that the scans in x and y are repeated for subsequent output frames. Since only one scanning control circuit is required for each of the x and y dimension, the pixel pitch can remain at the smaller size achieved using the shift registers.

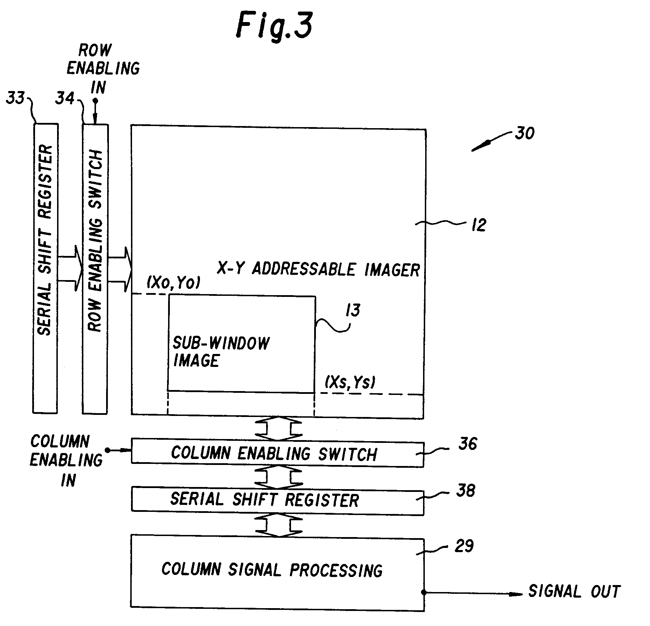

An alternate embodiment of the present invention is shown in Fig. 3, generally indicated as 30. In the alternate embodiment shown in Fig. 3, switch-enabling circuits 34, 36 are used in place of scanning control circuits to allow only a pre-determined sub-window 13 to be read out through column signal processing circuit 29. The switch enabling circuits are set up by loading a pre-determined sequence of digital "1's" on the rows and columns of interest, from the row and column serial shift registers, 33 and 38 respectively, only this portion of the imager is output. The drawback of this approach is that since all the pixels are scanned by the shift registers, there is no effective change in the frame rates of the readout.

Employing serial shift registers to select the signaling lines in both x and y directions simplifies the per row and per column circuit required compared to a full address decoder which takes up more area. This allows shrinking the pixel size of the imager to a smaller dimension. For example, the conventional APS pixel design is 20 times the smallest allowed line length of the integrated circuit fabrication technology. This 20 times limit is due to the size of the address decoder. By using the serial shift register integration, this limit can be reduced from between 7 to 15 times the size of the line length. Therefore, the overall size of the imager can be reduced by 25% to 67% without using higher cost smaller geometry fabrication technology. The present invention maintains the important features of sub-windowing when the shift register design is used to achieve smaller pixel and therefore smaller die-size.

The invention has been described with reference to a preferred embodiment. However, it will be appreciated that variations and modifications can be effected by a person of ordinary skill in the art without departing from the scope of the invention.

### PARTS LIST:

- 10: x-y addressable imager
- 12: x-y addressable imager
- 13: sub-window image
- 15: row decoder
- 17: column decoder
- 19: column signal processing
- 20: x-y addressable imager
- 23: shift register
- 24: row address
- 26: column address
- 28: shift register
- 29: column signal processing circuit
- 30: alternate embodiment
- 33: row serial shift register
- 34: switch-enabling circuits
- 36: switch-enabling circuits
- 38: column serial shift register

## Claims

1. An active pixel sensor that is x-y addressable comprising:
an x-y addressable imager having signal lines in both x and y directions;
at least one pair of serial shift registers operatively connected to the x-y imager such that there is at least one serial shift register in each x and y direction to select signal lines to be applied to the x-y imager; and
loading means for placing bit patterns into the shift registers.

2. The sensor of claim 1 wherein the loading means further comprises at least a pair of address control circuits such that there is at least one address control circuit for each x and y direction.

3. The sensor of claim 2 wherein the address control circuits further comprises means for placing a binary one into the serial shift registers at predetermined locations.

4. The sensor of claim 2 wherein the address control circuits further comprises means for placing a binary bit into the serial shift registers.

5. The sensor of claim 1 further comprising an enabling mechanism between at least one of the shift registers and the x-y imager.

6. A method of making an active pixel sensor that is x-y addressable comprising the steps of:
firstly providing an x-y addressable imager having signal lines in both x and y directions;
secondly providing at least one pair of serial shift registers operatively connected to the x-y imager such that there is at least one serial shift register in each x and y direction to select signal lines to be applied to the x-y imager; and
thirdly providing registers and control circuits for placing bit patterns into the shift registers.

7. The method of claim 6 wherein the step of thirdly providing comprises providing at least a pair of address control circuits such that there is at least one address control circuit for each x and y direction.

8. The method of claim 7 wherein the step of thirdly providing address control circuits further comprises providing means for placing a binary one into the serial shift registers at predetermined locations.

9. The method of claim 7 wherein the step of thirdly providing address control circuits further comprises providing means for placing a binary bit into the serial shift registers.

10. The method of claim 6 further comprising the step of providing an enabling mechanism between at least one of the shift registers and the x-y imager.
